Europäisches Patentamt

European Patent Office

Office européen des brevets

(19)

(11)    EP 1 724 949 A1

(12)    **EUROPEAN PATENT APPLICATION**
published in accordance with Art. 158(3) EPC

(43) Date of publication:
    **22.11.2006 Bulletin 2006/47**

(51) Int Cl.:
    **H04B 7/26** (2006.01)    **H04J 13/00** (2006.01)

(21) Application number: **05721624.4**

(22) Date of filing: **28.03.2005**

(86) International application number:
    **PCT/JP2005/005698**

(87) International publication number:
    **WO 2005/096523 (13.10.2005 Gazette 2005/41)**

(84) Designated Contracting States:
    **AT BE BG CH CY CZ DE DK EE ES FI FR GB GR HU IE IS IT LI LT LU MC NL PL PT RO SE SI SK TR**

(30) Priority: **30.03.2004 JP 2004100165**

(71) Applicant: **MATSUSHITA ELECTRIC INDUSTRIAL CO., LTD.**
    **Osaka 571-8501 (JP)**

(72) Inventor: **NISHIO, Akihiko., c/o Matsushita El.Ind.Co.Ltd.IP**
    **Osaka 540-6319 (JP)**

(74) Representative: **Grünecker, Kinkeldey, Stockmair & Schwanhäusser Anwaltssozietät**
    **Maximilianstraße 58**
    **D-80538 München (DE)**

(54)    **BASE STATION DEVICE, MOBILE STATION DEVICE, AND DATA CHANNEL ALLOCATION METHOD**

(57)    There is provided a base station capable of preventing lowering of throughput while suppressing interference to an adjacent cell and reduction of the line capacity in a high-speed packet transmission. In this base station, from mobile stations 1 to 7, firstly, mobile stations 1, 4, 6 having the downlink control channel line quality not smaller than a threshold value '3dB' set according to the total number of mobile stations are selected, and then from the mobile stations 1, 4, 6, the mobile station having the largest CQI, i.e., the mobile station 4 having the most preferable downlink data channel line quality is selected as a mobile station to which the data channel is allocated.

| MOBILE STATION NUMBER | CONTROL CH QUALITY | DATA CH QUALITY |
|---|---|---|
| 1 | 12 dB | 8 dB (CQI=7) |
| 2 | −4 dB | 12 dB (CQI=9) |
| 3 | 2 dB | 0 dB (CQI=3) |
| 4 | 5 dB | 10 dB (CQI=8) |
| 5 | −10 dB | 2 dB (CQI=4) |
| 6 | 8 dB | −3 dB (CQI=1) |
| 7 | −3 dB | −1 dB (CQI=2) |

FIG.7

EP 1 724 949 A1

**Description**

Technical Field

The present invention relates to a base station apparatus, mobile station apparatus, and data channel assignment method.

Background Art

HSDPA (High Speed Downlink Packet Access) is a method of performing high-speed packet transmission on a downlink in W-CDMA. In HSDPA, a plurality of mobile stations share one downlink data channel by means of time division. Thus, a base station performs scheduling to determine which mobile station packet data is to be transmitted to in each transmit frame, in accordance with the channel quality of each mobile station. This scheduling is performed as described below.

Each mobile station reports a CQI (Channel Quality Indicator), which is downlink data channel quality information, to a base station. In accordance with the CQI from each mobile station, the base station determines the transmission destination mobile station and MCS (Modulation and Coding Scheme) for packet data in that frame in accordance with a predetermined scheduling algorithm. Scheduling algorithms in accordance with channel quality are the Max C/I method and the PF (Proportional Fairness) method. The Max C/I method is a scheduling method whereby the downlink data channel is assigned to the mobile station whose downlink data channel instantaneous channel quality is best, and is suited more to maximizing downlink data channel throughput than to achieving fairness among mobile stations. The PF method, on the other hand, is a scheduling method whereby the downlink data channel is assigned to the mobile station with the highest ratio between downlink data channel instantaneous channel quality and downlink data channel average channel quality, and enables a good balance to be maintained between fairness among mobile stations and downlink data channel throughput. Thus, in HSDPA scheduling, downlink data channel scheduling is performed in accordance with downlink data channel quality (see Patent Document 1, for example).

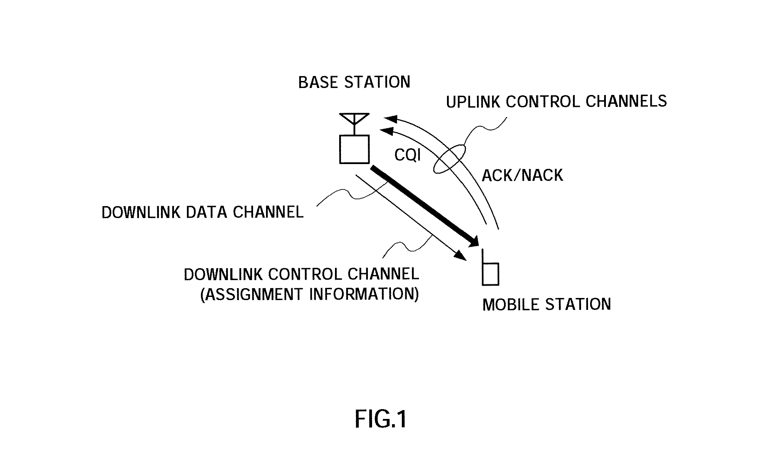

The general outlines of an HSDPA system will now be explained. FIG.1 is a conceptual diagram of an HSDPA system. First, there is a downlink data channel as a channel for transmitting packet data. This downlink data channel is shared by a plurality of mobile stations, as stated above. Downlink control channels and uplink control channels associated with the downlink data channel are also provided to transmit control information necessary for packet data transmission on the downlink data channel. A downlink control channel transmits information indicating to which mobile station the data channel is assigned in the above-described scheduling (data channel assignment information), and MCS information for each mobile station. Also, each mobile station reports a CQI and ACK/NACK to the base station using an uplink control channel. An ARQ (Automatic Repeat reQuest) is performed using ACK (ACKnowledgment) / NAK (Negative ACKnowledgment). For both the downlink and uplink control channels in FIG.1, there are individual channels for each mobile station.

Generally, in this kind of HSDPA system, fading is counteracted by keeping transmission power fixed for the downlink data channel, and varying the transmission rate by changing the MCS adaptively according to the channel quality. On the other hand, a required reception quality is obtained for a downlink control channel and uplink control channel by maintaining a fixed transmission rate and varying the transmission power according to the channel quality. Patent Document 1 : Unexamined Japanese Patent Publication No.2003-152630

Disclosure of Invention

Problems to be Solved by the Invention

When the channel quality of an uplink control channel is poor due to fading or the like, if the downlink data channel is assigned to, and packet data transmission performed to, the mobile station that uses that uplink control channel, the uplink control channel transmission power for sending ACK/NACK corresponding to that packet data to the base station at the required reception quality becomes high. As a result, interference affecting adjacent cells increases, and uplink capacity is constrained.

On the other hand, when the channel quality of a downlink control channel is poor, if the data channel is assigned to the mobile station that uses that downlink control channel, the downlink control channel transmission power for sending the above-described assignment information and MCS information to that mobile station at the required reception quality becomes high. As a result, interference affecting adjacent cells increases, and downlink capacity is constrained.

Also, in a communication system in which transmission power control is not performed for an uplink control channel, when the quality of an uplink control channel is poor due to fading or the like, if the downlink data channel is assigned to, and packet data transmission performed to, the mobile station that uses that uplink control channel, ACK/NACK corresponding to that packet data will not reach the base station at the required reception quality. The possibility of ACK/NACK not reaching the base station at the required reception quality is particularly high for a mobile station located near a cell boundary. As a result, packet data retransmission occurs and downlink data channel throughput falls.

It is an object of the present invention to provide a base station apparatus, mobile station apparatus, and data channel assignment method that enable interference in an adjacent cell and a reduction in channel capacity to be suppressed, and a drop in throughput to be prevented.

Means for Solving the Problems

A base station apparatus of the present invention has a configuration that includes: a selection section that selects a mobile station to which a data channel is assigned, in accordance with both channel quality of a control channel for transmitting control information necessary for data transmission on a data channel and channel quality of the data channel; and a transmitting section that performs radio transmission of data to a selected mobile station.

Advantageous Effect of the Invention

According to the present invention, interference in an adjacent cell and a reduction in channel capacity can be suppressed, and a drop in throughput can be prevented.

Brief Description of Drawings

FIG.1 is a conceptual diagram of an HSDPA system;
FIG.2 is a configuration diagram of a mobile communication system according to Embodiment 1 of the present invention;
FIG.3 is a block diagram showing the configuration of a base station apparatus according to Embodiment 1 of the present invention;
FIG.4 is an explanatory drawing of selection method 1 according to Embodiment 1 of the present invention;
FIG.5 is an explanatory drawing of selection method 2 according to Embodiment 1 of the present invention;
FIG. 6 is a drawing showing downlink control channel quality values and downlink data channel quality values (CQIs) according to Embodiment 1 of the present invention;
FIG.7 is an explanatory drawing of selection example 1 according to Embodiment 1 of the present invention;
FIG. 8 is an explanatory drawing of selection example 2 according to Embodiment 1 of the present invention;
FIG.9 is a block diagram showing the configuration of a base station apparatus according to Embodiment 2 of the present invention;
FIG.10 is a block diagram showing the configuration of a base station apparatus according to Embodiment 3 of the present invention; and
FIG.11 is a block diagram showing the configuration of a mobile station apparatus according to Embodiment 5 of the present invention.

Best Mode for Carrying Out the Invention

Embodiments of the present invention will now be described in detail with reference to the accompanying drawings.

(Embodiment 1)

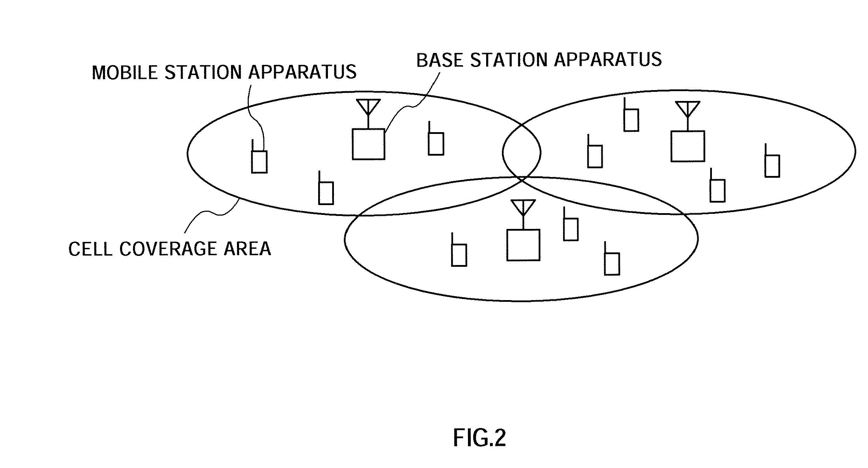

The configuration of a mobile communication system according to Embodiment 1 of the present invention is shown in FIG.2. As shown in this figure, a plurality of mobile stations are present within cells centered on a base station apparatus. In the example in FIG.2, amobile communication system composed of three cells is shown, but there is no particular limitation on the number of cells composing a mobile communication system.

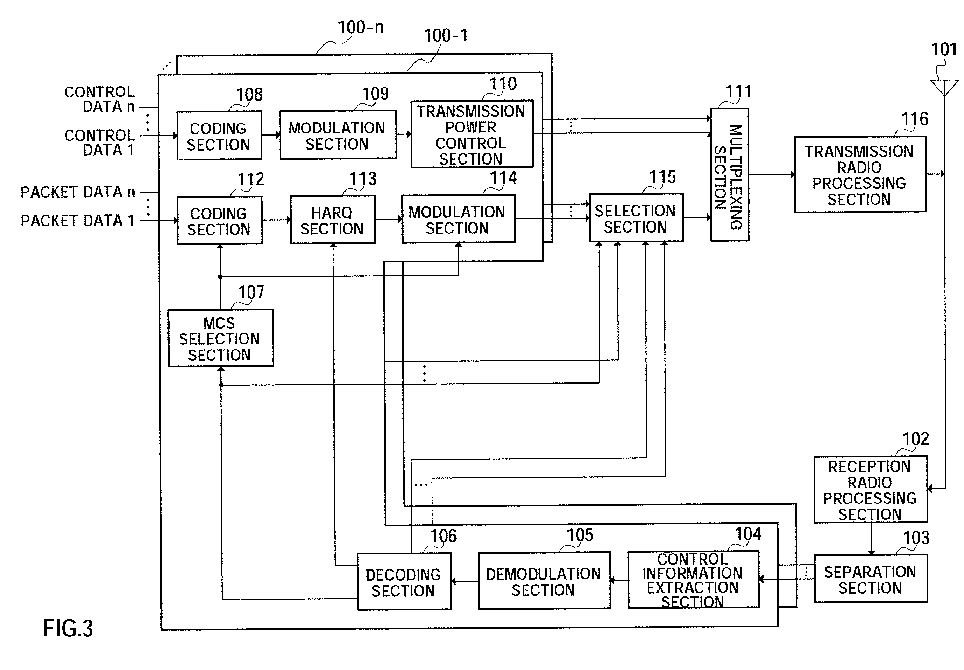

FIG. 3 is a block diagram showing the configuration of a base station apparatus according to Embodiment 1 of the present invention. A control information extraction section 104, demodulation section 105, decoding section 106, MCS selection section 107, coding section 108, modulation section 109, transmission power control section 110, coding section 112, HARQ (Hybrid Automatic Repeat Request) section 113, and modulation section 114 make up each of data processing sections 100-1 through 100-n. The number of data processing sections 100-1 through 100-n provided (n) corresponds to the number of mobile stations that can be accommodated by this base station apparatus, and each of data processing sections 100-1 through 100-n performs data processing for one mobile station.

A reception radio processing section 102 performs down-conversion of a received signal received by an antenna 101 from radio frequency to baseband frequency and so forth, and outputs the resulting signal to a separation section 103.

Separation section 103 separates the received signal input from reception radio processing section 102 for each mobile station, and outputs the resulting signal to control information extraction section 104.

Control information extraction section 104 extracts control information from the received signal input from separation section 103, and outputs this to demodulation section 105. This control information is information sent from each mobile station on the uplink control channel of each mobile station, and includes ACK/NACK for HARQ, a CQI, and downlink control channel quality information. With regard to ACK/NACK, each mobile station performs error detection on received packet data, and reports ACK to the base station when there is no error, or NACK when there is an error. With regard to the CQI, each mobile station measures the reception CIR of each subcarrier as the downlink data channel quality, and reports a CQI corresponding to that reception CIR to the base station. With regard to the downlink control channel quality, each mobile station measures the reception CIR of its own downlink control channel as downlink control channel quality, and reports this to the base station.

Demodulation section 105 demodulates control information input from control information extraction section 104, and outputs the demodulated control information to decoding section 106.

Decoding section 106 decodes the control information input from demodulation section 105, then outputs the CQI contained in the control information to MCS selection section 107 and a selection section 115. In addition, decoding section 106 outputs ACK or NACK contained in the control information to HARQ section 113. Furthermore, decoding section 106 outputs downlink control channel quality information contained in the control information to selection section 115.

MCS selection section 107 selects the packet data modulation method (BPSK, QPSK, 8PSK, 16QAM, 64QAM, etc.) and coding rate according to the CQI input from decoding section 106. MCS selection section 107 has an MCS table showing the correspondence between CQIs, modulation methods, and coding rates, and selects the modulation method and coding rate by referring to the MCS table using the CQI sent from the mobile station. MCS selection section 107 then outputs information indicating the selected modulation method to modulation section 114, and outputs information indicating the selected coding rate to coding section 112.

Coding section 108 codes input control data using a predetermined coding rate, and outputs the coded control data to modulation section 109. Control data 1 is a sequence of control data addressed to mobile station 1 and control data n is a sequence of control data addressed to mobile station n, transmitted on a downlink control channel. This control data includes the above-described assignment information and per-mobile-station MCS information.

Modulation section 109 modulates control data input from coding section 108 in accordance with a predetermined modulation method, and outputs the modulated control data to transmission power control section 110.

Transmission power control section 110 controls the transmission power of the control data, and outputs the control data to a multiplexing section 111. This transmission power control is performed according to the downlink control channel quality. That is to say, each mobile station measures the downlink control channel quality, creates a TPC command in accordance with the result of comparing that channel quality with a threshold value, and reports this to the base station, and the base station raises or lowers the control data transmission power in accordance with that TPC command.

Coding section 112 codes input packet data using the coding rate selected by MCS selection section 107, and outputs the resulting data to HARQ section 113. Packet data 1 is a sequence of packet data addressed to mobile station 1 and packet data n is a sequence of packet data addressed to mobile station n, transmitted on the downlink data channel.

HARQ section 113 outputs packet data input from coding section 112 to modulation section 114, and also temporarily holds the packet data output to modulation section 114. Then, when NACK is input from decoding section 106, since retransmission is being requested by the mobile station, HARQ section 113 again outputs the temporarily held previously-output packet data to modulation section 114. On the other hand, when ACK is input from decoding section 106, HARQ section 113 outputs new packet data to modulation section 114.

Modulation section 114 modulates packet data input from HARQ section 113 in accordance with the modulation method selected by MCS selection section 107, and outputs the modulated packet data to selection section 115.

In accordance with the CQI and downlink control channel quality information input from decoding section 106, selection section 115 selects packet data to be output to multiplexing section 111 from among packet data 1 through n. The actual selection method will be described later herein.

Multiplexing section 111 multiplexes control data 1 through n input from transmission power control section 110 and packet data input from selection section 115, and outputs the multiplexed data to a transmission radio processing section 116.

Transmission radio processing section 116 performs up-conversion of the multiplexed data input from multiplexing section 111 from baseband frequency to radio frequency and so forth, and transmits the resulting signal from antenna 101.

The operation of selection section 115 will now be described. Selection section 115 selects a mobile station to which the downlink data channel is assigned, in accordance with the downlink control channel quality reported by each mobile station. Also, selection section 115 selects a mobile station to which the downlink data channel is assigned, in accordance with CQIs indicating the downlink data channel quality.

<Selection Method 1>

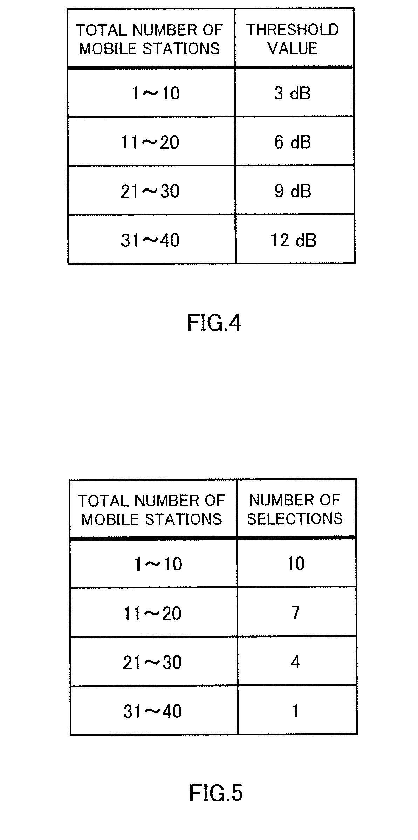

In selection method 1, selection section 115 selects mobile stations whose downlink control channel quality is greater than or equal to a threshold value as mobile stations to which the downlink data channel is assigned, and outputs packet data addressed to the selected mobile stations to multiplexing section 111. As shown in FIG.4, this threshold value is determined according to the total number of mobile stations that are located within the cell of the base station shown in FIG. 3, and can communicate with the base station shown in FIG.3 - that is, the total number of mobile stations currently accommodated by the base station shown in FIG.3 (the total number of mobile stations). Also, as shown in FIG.4, the greater the total number of mobile stations, the higher is the value set for this threshold value. Normally, information relating to the number of mobile stations is managed by a control station that is a higher-level station than a base station, and therefore this total number of mobile stations is reported to the base station shown in FIG.3 from the control station. Selection section 115 then sets a downlink control channel quality threshold value as described above in accordance with this reported total number of mobile stations. It is also possible for the total number of mobile stations to be determined from the quantity of packet data accumulated in the base station's transmit queue (not shown). That is to say, the greater the quantity of data accumulated in the transmit queue, the larger the total number of mobile stations is determined to be. Thus, in selection method 1, when the total number of mobile stations is large, a high threshold value is set in order to keep mutual interference between mobile station slow, and, conversely, when the total number of mobile stations is small, a low threshold value is set in order to reflect the data channel quality as far as possible in the selection of a mobile station to which the downlink data channel is assigned.

<Selection Method 2>

In selection method 2, selection section 115 selects mobile stations, in high-to-low order of downlink control channel quality, up to number of selections set according to the total number of mobile stations, as mobile stations to which the downlink data channel is assigned, and outputs packet data addressed to the selected mobile stations to multiplexing section 111. As shown in FIG.5, the larger the total number of mobile stations, the lower is the value set for this number of selections. Thus, in selection method 2, when the total number of mobile stations is large, a low number of selections is set in order to keep mutual interference between mobile stations low, and, conversely, when the total number of mobile stations is small, a high number of selections is set in order to reflect the data channel quality as far as possible in the selection of a mobile station to which the downlink data channel is assigned.

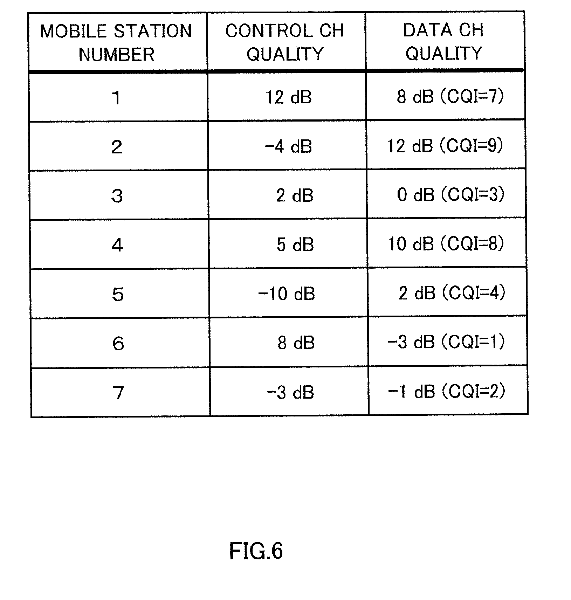

Next, actual examples of selection using selection method 1 will be described. Although the number of mobile stations finally selected may be a plurality according to the number of mobile stations that can be multiplexed in the downlink data channel, in order to simplify the explanation it will be assumed here that one mobile station is finally selected. The total number of mobile stations is assumed to be 7, and the downlink control channel quality values and downlink data channel quality values (CQIs) reported from mobile stations 1 through 7 are assumed to be as shown in FIG.6.

<Selection Example 1>

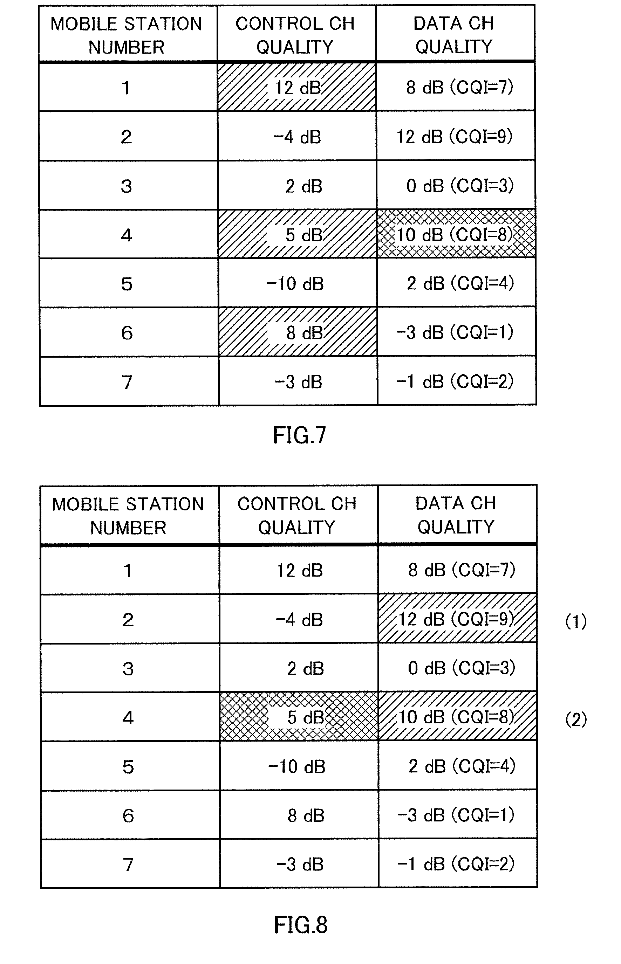

In selection example 1, selection is performed in accordance with downlink control channel quality, and then selection is further performed in accordance with downlink data channel quality. First, selection section 115 sets a threshold value according to the total number of mobile stations. As the total number of mobile stations in this example is 7, in accordance with FIG.4, "3 dB" is set as the downlink control channel quality threshold value. Selection section 115 then selects mobile stations whose downlink control channel quality is 3 dB or above from among mobile stations 1 through 7. As a result, mobile stations 1, 4, and 6 are first selected, as shown in FIG.7. Next, one mobile station is selected from among mobile stations 1, 4, and 6, in accordance with the CQIs . As the reported CQI value is normally higher the better the downlink data channel quality, selection section 115 selects the mobile station that reported the highest CQI value from among mobile stations 1, 4, and 6. As a result, mobile station 4 is finally selected as the mobile station to which the downlink data channel is assigned, as shown in FIG.7. When the number of mobile stations that can be multiplexed in the downlink data channel is 2, for example, two mobile stations - mobile stations 1 and 4 - are finally selected as mobile stations to which the downlink data channel is assigned.

<Selection Example 2>

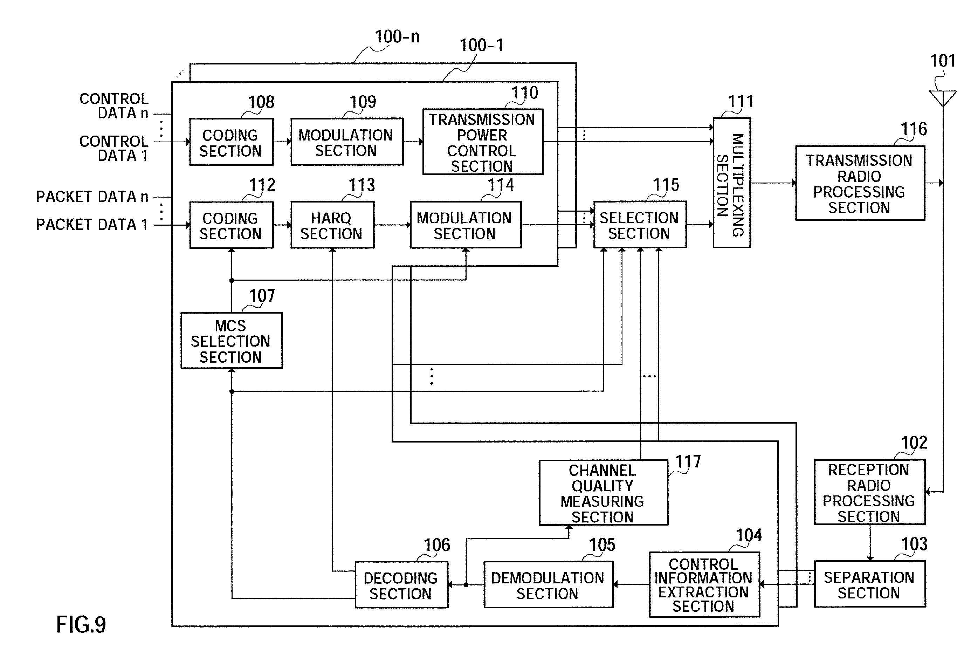

In selection example 2, conversely to selection example 1, selection is performed in accordance with downlink data channel quality, and then selection is further performed in accordance with downlink control channel quality. First, as shown in FIG.8, selection section 115 selects mobile station 2, the mobile station with the best downlink data channel quality (that is, the highest CQI value) (FIG.8 (1)). Then selection section 115 compares the "-4 dB" downlink control channel quality value reported by mobile station 2 with the "3 dB" threshold value set in the same way as in selection example 1 above. As the downlink control channel quality of mobile station 2 is lower than the threshold value, selection section 115 does not assign the downlink data channel to mobile station 2. As mobile station 2 is ineligible as a mobile station to which the downlink data channel is assigned, selection section 115 next selects mobile station 4, the mobile station with the second-best downlink data channel quality (that is, the second-highest CQI value) (FIG.8 (2)). Then selection section 115 compares the "5 dB" downlink control channel quality value reported by mobile station 4 with the "3 dB" threshold value. As the downlink control channel quality of mobile station 4 is higher than the threshold value, selection section 115 finally selects mobile station 4 as the mobile station to which the downlink data channel is assigned. When, for example, the number of mobile stations that can be multiplexed in the downlink data channel is "K" (a plural number), the same kind of processing is repeated until K mobile stations are selected.

Thus, according to this embodiment, downlink data channel assignment is performed for mobile stations taking not only downlink data channel quality but also downlink control channel quality into consideration. That is to say, in this embodiment, a downlink data channel is assigned only to a mobile station with good downlink control channel quality, and a downlink data channel is not assigned to a mobile station with poor downlink control channel quality, making it possible to prevent the transmission power of downlink control channels for sending above-described assignment information and MCS information from becoming high, and enabling interference in adjacent cells to be suppressed, in a communication system in which transmission power control is not performed for control channels. As a result, a reduction in downlink capacity can be suppressed. Also since a downlink data channel is not assigned to a mobile station with poor downlink control channel quality, it is possible to send above-described assignment information and MCS information to a mobile station without errors at the required reception quality, even in a communication system in which transmission power control is not performed for a downlink control channel. Thus, wasteful retransmissions of packet data due to errors in these kinds of control information can be prevented, and transmission efficiency can be improved.

If the base station shown in FIG.3 is used in a communication system in which transmission power control is not performed for control channels, transmission power control section 110 is not necessary in the configuration in FIG.3.

(Embodiment 2)

FIG.9 is a block diagram showing the configuration of a base station apparatus according to Embodiment 2 of the present invention. Parts in FIG.9 identical to those in FIG.3 (Embodiment 1) are assigned the same codes as in FIG. 3, and descriptions thereof are omitted.

In FIG.9, demodulation section 105 demodulates control information input from control information extraction section 104, and outputs the demodulated control information to decoding section 106 and a channel quality measuring section 117. As explained above, this control information is transmitted from each mobile station on an uplink control channel of eachmobile station. Channel quality measuring section 117 measures a reception CIR of control information input from demodulation section 105 as the uplink control channel quality of the corresponding mobile station, and outputs this to selection section 115. In the same way as in Embodiment 1, selection section 115 selects packet data to be output to multiplexing section 111 from among packet data 1 through n in accordance with the uplink control channel quality information (reception CIR) input from channel quality measuring section 117.

Decoding section 106 decodes the control information input from demodulation section 105, then outputs a CQI contained in the control information to MCS selection section 107 and selection section 115. In addition, decoding section 106 outputs ACK or NACK contained in the control information to HARQ section 113.

Thus, according to this embodiment, downlink data channel assignment is performed for mobile stations taking not only downlink data channel quality but also uplink control channel quality into consideration. That is to say, in this embodiment, the downlink data channel is assigned only to a mobile station with good uplink control channel quality, and the downlink data channel is not assigned to amobile station with poor uplink control channel quality, making it possible to prevent the transmission power of uplink control channels for sending ACK/NACK and CQIs from becoming high, and enabling interference in adjacent cells to be suppressed. As a result, a reduction in uplink capacity can be suppressed. Also, since the data channel is not assigned to a mobile station with poor uplink control channel quality, the possibility of ACK/NACK not reaching a base station at the required reception quality can be reduced even in a communication system in which transmission power control is not performed for uplink control channels. As a result, a drop in downlink data channel throughput due to the occurrence of retransmissions can be suppressed.

(Embodiment 3)

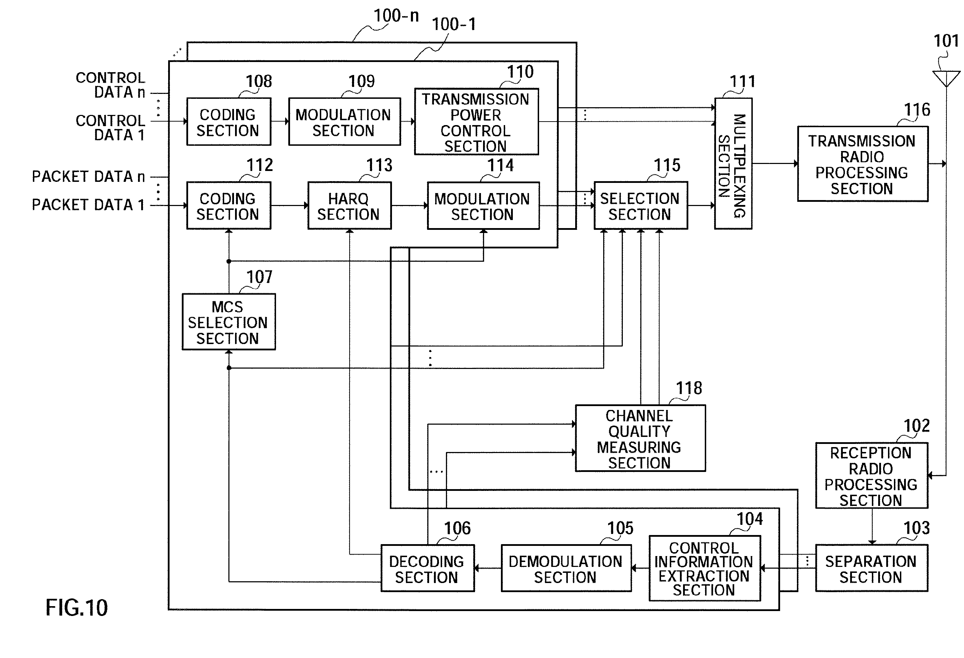

FIG.10 is a block diagram showing the configuration of a base station apparatus according to Embodiment 3 of the present invention. Parts in FIG.10 identical to those in FIG. 3 (Embodiment 1) are assigned the same codes as in FIG.3, and descriptions thereof are omitted.

In FIG.10, demodulation section 105 demodulates control information input from control information extraction section 104, and outputs the demodulated control information to decoding section 106. This control information has its transmission power controlled in each mobile station, and is transmitted to the base station on the uplink control channel for each mobile station. In addition to ACK/NACK and a CQI, this control information includes a control information transmission power value (that is, uplink control channel transmission power value) for each mobile station.

Decoding section 106 decodes the control information input from demodulation section 105, then outputs a CQI contained in the control information to MCS selection section 107 and selection section 115, and also outputs ACK or NACK contained in the control information to HARQ section 113. In addition, decoding section 106 outputs transmission power information contained in the control information to a channel quality estimation section 118.

Channel quality estimation section 118 estimates the uplink control channel quality from the transmission power information and target CIR, and outputs the estimation result to selection section 115. Channel quality estimation is performed by means of Equation (1) below.

$$CIRt = Pt/(\alpha \times I) \quad ... \quad (1)$$

In Equation (1), CIRt indicates the uplink control channel target CIR, Pt indicates the uplink control channel transmission power value in each mobile station, $\alpha$ indicates uplink control channel propagation path variation, I indicates the interference power value on the uplink control channel, and $\alpha \times I$ indicates the uplink control channel quality. In Equation (1), also, it is assumed that the uplink control channel is received in the base station with the target CIR. Thus, from Equation (1), uplink control channel quality $\alpha \times I$ can be estimated as Pt/CIRt. It is also possible to estimate the uplink control channel quality using the reception CIR instead of the target CIR in Equation (1).

In the same way as in Embodiment 1, selection section 115 selects packet data to be output to multiplexing section 111 from among packet data 1 through n, in accordance with the uplink control channel quality estimated by channel quality estimation section 118.

Thus, according to this embodiment, the downlink data channel is assigned only to a mobile station with good uplink control channel quality, and, as in Embodiment 2, the downlink data channel is not assigned to a mobile station with poor uplink control channel quality, making it possible to prevent the transmission power of uplink control channels for sending ACK/NACK and CQIs to a base station from becoming high, and enabling interference in adjacent cells to be suppressed. As a result, a reduction in uplink capacity can be suppressed.

Also, by estimating uplink control channel quality from transmission power information and a target CIR, uplink control channel quality can be estimated with a good degree of precision even when an uplink control channel is subjected to transmission power control, or when the target CIR is controlled by outer-loop control or the like.

(Embodiment 4)

In the case of a mobile station located near the center of a cell, the control channel transmission power of that mobile station is low since it is a short distance from the base station. Therefore, a control channel of a mobile station located near the center of a cell causes little interference in an adjacent cell. In the case of a mobile station located near the boundary of a cell, the control channel transmission power of that mobile station is high since it is far from the base station. Therefore, a control channel of a mobile station located near the boundary of a cell causes greater interference in an adjacent cell. Thus, in this embodiment, downlink data channel assignment that takes control channel quality into consideration, as described in above Embodiments 1 through 3, is performed only for a mobile station located near the boundary of a cell, whereas for a mobile station located near the center of a cell, downlink data channel assignment is performed in accordance with only on downlink data channel quality, without taking control channel quality into consideration. Whether or not a mobile station is located near the boundary of a cell is determined by whether or not the distance between that mobile station and the base station is greater than or equal to a predetermined value. Distance measurement is performed by means of the average received power of a common pilot at each mobile station.

That is to say, each mobile station measures the average received power of a long section of the common pilot channel, and includes that measurement result in control information that is reported to the base station periodically on the uplink control channel (FIGS.3, 9, and 10). Decoding section 106 of the base station (FIGS.3, 9, and 10) outputs the average received power contained in the control information to selection section 115 together with the CQI. The lower the average received power of the common pilot channel, the farther a mobile station can be determined to be from the base station. That is to say, a mobile station for which the average received power of the common pilot channel is lower than a predetermined value can be determined to be at a distance from the base station greater than or equal to a predetermined value, and to be a mobile station located near the boundary of the cell. Thus, selection section 115 compares the average received power of the common pilot channel at each mobile station with a predetermined threshold value, and performs downlink data channel assignment that takes control channel quality into consideration, as described in above Embodiments 1 through 3, only for a mobile station for which the average received power is lower than the threshold value. For other mobile stations, selection section 115 performs downlink data channel assignment based only on downlink data channel quality, in the conventional way.

Thus, according to this embodiment, downlink data channel assignment that takes control channel quality into consideration is performed only for a mobile station that is located near the boundary of a cell and causes major interference in an adjacent cell, and downlink data channel assignment based only on downlink data channel quality is performed in the conventional way for other mobile stations that cause little interference in an adjacent cell, thereby enabling interference affecting an adjacent cell to be suppressed, and packet data transmission efficiency to be increased for mobile stations that cause little interference in an adjacent cell.

(Embodiment 5)

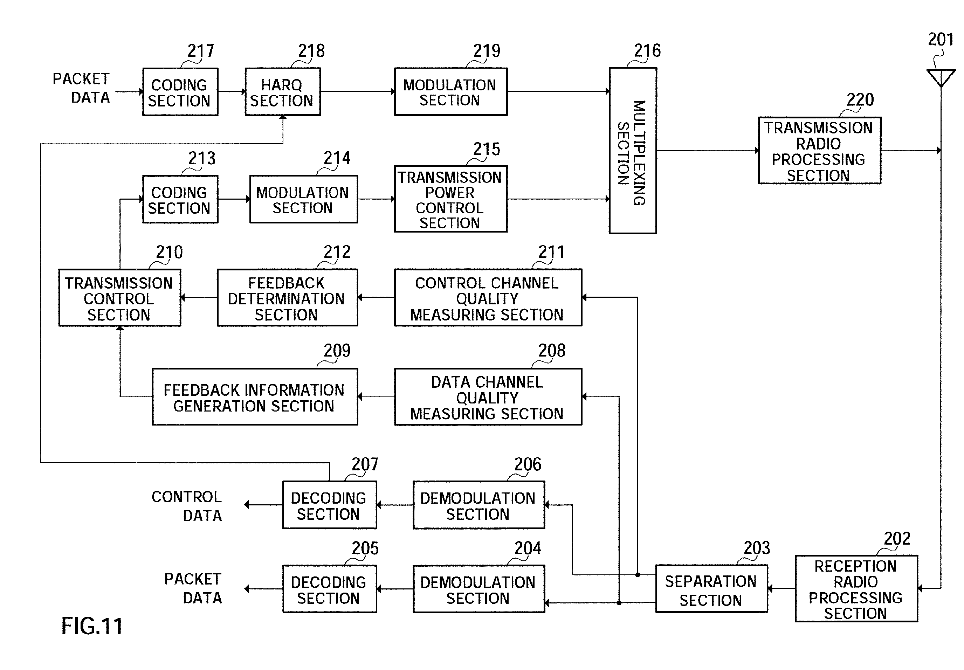

FIG.11 is a block diagram showing the configuration of a mobile station apparatus according to Embodiment 5 of the present invention.

In FIG.11, a reception radio processing section 202 performs down-conversion of a received signal received by an antenna 201 from radio frequency to baseband frequency and so forth, and outputs the resulting signal to a separation section 203.

Separation section 203 separates the signal input from reception radio processing section 202 into a data channel signal and control channel signal, outputs the data channel signal to a demodulation section 204 and a data channel quality measuring section 208, and outputs the control channel signal to a demodulation section 206 and a control channel quality measuring section 211.

Demodulation section 204 demodulates the data channel signal, and a decoding section 205 decodes the demodulated data channel signal. By this means, packet data is obtained.

Demodulation section 206 demodulates the control channel signal, and a decoding section 207 decodes the demodulated control channel signal. By this means, control data is obtained. Decoding section 207 also outputs ACK or NACK contained in the control data to an HARQ section 218. With regard to ACK/NACK, the base station performs error detection on received packet data, and reports ACK to the mobile station when there is no error, or NACK when there is an error.

Data channel quality measuring section 208 measures the data channel signal reception quality (for example, the reception CIR), and outputs this to a feedback information generation section 209.

Feedback information generation section 209 generates a CQI (Channel Quality Indicator), which is channel quality information, from the data channel signal reception quality as feedback information, and outputs this to a transmission control section 210.

Control channel quality measuring section 211 measures the control channel signal reception quality (for example, the reception CIR), and outputs this to a feedback determination section 212.

Feedback determination section 212 compares the control channel signal reception quality with a predetermined threshold value, and determines that CQI feedback is to be performed when the reception quality is greater than or equal to the threshold value, or determines that CQI feedback is not to be performed when the reception quality is less than the threshold value. The result of this determination is output to transmission control section 210.

If the determination result is that feedback is to be performed, transmission control section 210 outputs the CQI to a coding section 213. If the determination result is that feedback is not to be performed, transmission control section 210 does not output anything.

If a CQI is input from transmission control section 210, coding section 213 codes that CQI and outputs it to a modulation section 214. If there is no input from transmission control section 210, coding section 213 does not perform any processing.

Modulation section 214 modulates a CQI input from coding section 213 in accordance with a predetermined modulation method, and outputs the result to a transmission power control section 215.

Transmission power control section 215 controls the transmission power of the CQI, and outputs it to a multiplexing section 216. This transmission power control is performed according to uplink control channel quality. That is to say, the base station measures the uplink control channel quality, creates a TPC command in accordance with the result of comparing that channel quality with a threshold value, and reports this to the mobile station, and the mobile station raises or lowers the CQI transmission power in accordance with that TPC command.

A coding section 217 codes input packet data, and outputs the coded packet data to HARQ section 218.

HARQ section 218 outputs packet data input from coding section 217 to a modulation section 219, and also temporarily holds the packet data output to modulation section 219. Then, when NACK is input from decoding section 207, since retransmission is being requested by the base station, HARQ section 218 again outputs the temporarily held previously-output packet data to modulation section 219. On the other hand, when ACK is input from decoding section 207, HARQ section 218 outputs new packet data to modulation section 219.

Modulation section 219 modulates packet data input from HARQ section 218 in accordance with a predetermined modulation method, and outputs the modulated packet data to multiplexing section 216.

Multiplexing section 216 multiplexes the CQI input from transmission power control section 215 and packet data input from modulation section 219, and outputs the multiplexed data to a transmission radio processing section 220.

Transmission radio processing section 220 performs up-conversion of the multiplexed data input from multiplexing section 216 from baseband frequency to radio frequency and so forth, and transmits the resulting signal from antenna 201.

If a mobile station according to this embodiment does not feed back a CQI, the base station performs processing for that mobile station regarding the CQI used by above-described selection section 115 as a minimum-value CQI (in FIGS.6 through 8, CQI=1), or excludes it from processing by above-described selection section 115.

Thus, according to this embodiment, a mobile station determines whether or not to perform data channel CQI feedback to the base station according to control channel quality. That is to say, data channel reception quality information is transmitted to the base station when the control channel quality is greater than or equal to a threshold value, and data channel reception quality information is not transmitted to the base station when the control channel quality is less than a threshold value. Thus, in this embodiment, unnecessary CQI feedback is not performed, enabling the amount of uplink transmission to be reduced. By this means, interference in adjacent cells can be suppressed, as a result of which uplink capacity can be increased. Also, a mobile station with poor control channel quality can be excluded from processing in a base station, enabling the amount of processing by the base station to be reduced. As the possibility of packet data addressed to a mobile station with poor control channel quality not being assigned in a base station is high, packet data throughput is not lowered.

In the above embodiments, data channel scheduling is performed by means of the so-called MaxC/I method, but data channel scheduling may also be performed by means of the so-called PF (Proportional Fairness) method. The MaxC/I method is a scheduling algorithm based only on instantaneous channel quality, suited more to maximizing downlink data channel throughput than to achieving fairness among mobile stations. The PF method, on the other hand, is a scheduling algorithm in accordance with the ratio of the average channel quality of a long section to instantaneous channel quality, enabling a good balance to be maintained between fairness among mobile stations and downlink data channel throughput.

In the above embodiments, channel quality estimation and measurement can be performed using a reception SNR, reception SIR, reception SINR, reception CINR, received power, interference power, bit error rate, throughput, an MCS that enables a predetermined error rate to be achieved, and so forth.

Channel quality information may be expressed as a CQI, CSI (Channel State Information), or the like.

Feedback information from a mobile station to a base station need not be only channel quality information, but may also be ACK/NACK or other information.

A data channel in the above embodiments may be, for example, in the 3GPP standard, an HS-DSCH, DSCH, DPDCH, DCH, S-CCPCH, FACH, or the like.

Control channels in the above embodiments include, for example, in the 3GPP standard, HS-SSCH and HS-DPCCH, which are channels associated with HS-DSCH, DCCH for reporting control information for RRM (Radio Resource Management), DPCCH for S-CCPCH, P-CCPCH, PCH, and BCH physical channel control, and so forth.

In the above embodiments, a base station may be indicated by "Node B" and a mobile station by "UE."

The function blocks used in the descriptions of the above embodiments are typically implemented as LSIs, which are integrated circuits. These may be implemented individually as single chips, or a single chip may incorporate some or all of them.

Here, the term LSI has been used, but the terms IC, system LSI, super LSI, and ultra LSI may also be used according to differences in the degree of integration.

The method of implementing integrated circuitry is not limited to LSI, and implementation by means of dedicated circuitry or a general-purpose processor may also be used. An FPGA (Field Programmable Gate Array) for which programming is possible after LSI fabrication, or a reconfigurable processor allowing reconfiguration of circuit cell connections and settings within an LSI, may also be used.

In the event of the introduction of an integrated circuit implementation technology whereby LSI is replaced by a different technology as an advance in, or derivation from, semiconductor technology, integration of the function blocks may of course be performed using that technology. The adaptation of biotechnology or the like is also a possibility.

The present application is based on Japanese Patent Application No. 2004-100165 filed on March 30, 2004, entire content of which is expressly incorporated herein by reference.

Industrial Applicability

A base station apparatus and data channel assignment method according to the present invention are particularly useful in a high-speed packet transmission system, radio LAN system, or the like.

**Claims**

1. A base station apparatus comprising:

    a selection section that selects a mobile station to which a data channel is assigned, in accordance with both channel quality of a control channel for transmitting control information necessary for data transmission on a data channel and channel quality of the data channel; and
    a transmitting section that performs radio transmission of data to a selected mobile station.

2. The base station apparatus according to claim 1, wherein the selection section selects a mobile station for which the channel quality of the control channel is greater than or equal to a threshold value set according to a total number of mobile stations currently accommodated by the base station apparatus.

3. The base station apparatus according to claim 1, wherein the selection section selects mobile stations in high-to-low order of the channel quality of the control channel up to number of selections set according to a total number of mobile stations currently accommodated by the base station apparatus.

4. The base station apparatus according to claim 1, wherein the selection section performs selection in accordance with the channel quality of the data channel after performing selection in accordance with the channel quality of the control channel.

5. The base station apparatus according to claim 1, wherein the selection section selects a mobile station to which a data channel is assigned, in accordance with channel quality of a downlink control channel for transmitting data channel assignment information or MCS information.

6. The base station apparatus according to claim 1, wherein the selection section selects a mobile station to which a data channel is assigned, in accordance with channel quality of an uplink control channel for transmitting ACK or NACK.

7. The base station apparatus according to claim 1, wherein the selection section performs selection in accordance with both channel quality of the control channel and the channel quality of the data channel only for a mobile station whose distance from the base station is greater than or equal to a predetermined value.

8. A mobile station apparatus comprising:

    a first measuring section that measures channel quality of a control channel;
    a second measuring section that measures channel quality of a data channel;
    a generation section that generates channel quality information from the channel quality of the data channel; and
    a determination section that determines whether or not the channel quality information is to be transmitted, in accordance with the channel quality of the control channel.

9. The mobile station apparatus according to claim 8, wherein the determination section determines that the channel quality information is to be transmitted when the channel quality of the control channel is greater than or equal to a threshold value, and determines that the channel quality information is not to be transmitted when the channel quality of the control channel is less than a threshold value.

10. The mobile station apparatus according to claim 8, wherein the first measuring section measures channel quality using a reception SIR of the control channel.

11. The mobile station apparatus according to claim 8, wherein the first measuring section measures channel quality using required transmission power of the control channel.

**12.** A data channel assignment method whereby a mobile station to which a data channel is assigned is selected in accordance with both channel quality of a control channel for transmitting control information necessary for data transmission on a data channel and channel quality of the data channel.

BASE STATION

UPLINK CONTROL CHANNELS

CQI

ACK/NACK

DOWNLINK DATA CHANNEL

DOWNLINK CONTROL CHANNEL
(ASSIGNMENT INFORMATION)

MOBILE STATION

FIG.1

EP 1 724 949 A1

MOBILE STATION APPARATUS

BASE STATION APPARATUS

CELL COVERAGE AREA

FIG.2

FIG.3

| TOTAL NUMBER OF MOBILE STATIONS | THRESHOLD VALUE |
|---|---|
| 1~10 | 3 dB |
| 11~20 | 6 dB |
| 21~30 | 9 dB |
| 31~40 | 12 dB |

FIG.4

| TOTAL NUMBER OF MOBILE STATIONS | NUMBER OF SELECTIONS |
|---|---|
| 1~10 | 10 |
| 11~20 | 7 |
| 21~30 | 4 |
| 31~40 | 1 |

FIG.5

| MOBILE STATION NUMBER | CONTROL CH QUALITY | DATA CH QUALITY |
|---|---|---|
| 1 | 12 dB | 8 dB (CQI=7) |
| 2 | −4 dB | 12 dB (CQI=9) |
| 3 | 2 dB | 0 dB (CQI=3) |
| 4 | 5 dB | 10 dB (CQI=8) |
| 5 | −10 dB | 2 dB (CQI=4) |
| 6 | 8 dB | −3 dB (CQI=1) |
| 7 | −3 dB | −1 dB (CQI=2) |

FIG.6

| MOBILE STATION NUMBER | CONTROL CH QUALITY | DATA CH QUALITY |
|---|---|---|
| 1 | 12 dB | 8 dB (CQI=7) |
| 2 | -4 dB | 12 dB (CQI=9) |
| 3 | 2 dB | 0 dB (CQI=3) |
| 4 | 5 dB | 10 dB (CQI=8) |
| 5 | -10 dB | 2 dB (CQI=4) |
| 6 | 8 dB | -3 dB (CQI=1) |
| 7 | -3 dB | -1 dB (CQI=2) |

FIG.7

| MOBILE STATION NUMBER | CONTROL CH QUALITY | DATA CH QUALITY | |
|---|---|---|---|
| 1 | 12 dB | 8 dB (CQI=7) | |
| 2 | -4 dB | 12 dB (CQI=9) | (1) |
| 3 | 2 dB | 0 dB (CQI=3) | |
| 4 | 5 dB | 10 dB (CQI=8) | (2) |
| 5 | -10 dB | 2 dB (CQI=4) | |
| 6 | 8 dB | -3 dB (CQI=1) | |
| 7 | -3 dB | -1 dB (CQI=2) | |

FIG.8

FIG.9

FIG.10

EP 1 724 949 A1

FIG.11

## INTERNATIONAL SEARCH REPORT

| International application No. |
|---|
| PCT/JP2005/005698 |

| A. CLASSIFICATION OF SUBJECT MATTER |
|---|
| Int.Cl$^7$ H04B7/26, H04J13/00 |

According to International Patent Classification (IPC) or to both national classification and IPC

| B. FIELDS SEARCHED |
|---|

Minimum documentation searched (classification system followed by classification symbols)
  Int.Cl$^7$ H04B7/24-7/26, H04Q7/00-7/38, H04J13/00

Documentation searched other than minimum documentation to the extent that such documents are included in the fields searched
  Jitsuyo Shinan Koho          1922-1996   Jitsuyo Shinan Toroku Koho   1996-2005
  Kokai Jitsuyo Shinan Koho    1971-2005   Toroku Jitsuyo Shinan Koho   1994-2005

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2003-199173 A  (NEC Corp.),<br>11 July, 2003 (11.07.03),<br>& US 2003/0073409 A1      & CA 2408423 A1<br>& EP 1304900 A2          & KR 2003032857 A<br>& CN 1491049 A           & AU 2002338664 A1 | 1-12 |
| A | WO 2003/085862 A1  (Mitsubishi Electric Corp.),<br>16 October, 2003 (16.10.03),<br>(Family: none) | 1-12 |
| A | JP 2003-318861 A  (NEC Corp.),<br>07 November, 2003 (07.11.03),<br>& WO 2003/084099 A1      & JP 2003-298498 A<br>& EP 1496628 A1 | 1-12 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>  27 June, 2005 (27.06.05) | Date of mailing of the international search report<br>  12 July, 2005 (12.07.05) |
|---|---|
| Name and mailing address of the ISA/<br>  Japanese Patent Office | Authorized officer |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003152630 A
- JP 2004100165 A